Europäisches Patentamt

European Patent Office

Office européen des brevets

(11) Numéro de publication : **0 311 514 B1**

(12)                        **FASCICULE DE BREVET EUROPEEN**

(45) Date de publication du fascicule du brevet :
20.03.91 Bulletin 91/12

(51) Int. Cl.⁵ : **F02C 7/04**

(21) Numéro de dépôt : **88402516.4**

(22) Date de dépôt : **05.10.88**

(54) **Capot d'entrée non tournant de turboréacteur à fixation centraie et turboréacteur ainsi équipé.**

(30) Priorité : 07.10.87 FR 8713826

(43) Date de publication de la demande :
12.04.89 Bulletin 89/15

(45) Mention de la délivrance du brevet :
20.03.91 Bulletin 91/12

(84) Etats contractants désignés :
**DE FR GB IT**

(56) Documents cités :
FR-A- 2 168 938
FR-A- 2 253 922
FR-A- 2 315 616
FR-A- 2 502 690

(73) Titulaire : **SOCIETE NATIONALE D'ETUDE ET
DE CONSTRUCTION DE MOTEURS
D'AVIATION, "̶   E.C.M.A."
2, Boulevard d.   ̶énéral Martial Vaiin
F-75015 Paris (FR)**

(72) Inventeur : **Asseiin, Jean-Claude
17, rue du Gros Bois
F-77250 Moret sur Loing (FR)**
Inventeur : **Glowacki, Pierre Antoine
21, rue des Passe-Loups
F-77770 Fontaine le Port (FR)**

(74) Mandataire : **Moinat, François et al
S.N.E.C.M.A. Service des Brevets Boîte
Postale 81
F-91003 Evry Cédex (FR)**

## Description

La présente invention concerne un capot d'entrée de turboréacteur à fixation centrale et elle concerne également un turboréacteur muni d'un tel capot d'entrée.

Les turboréacteurs comportent généralement à l'avant un capot présentant une forme générale conique dont l'extrémité peut être arrondie ou non. Diverses solutions ont été appliquées pour la fixation de tels capots d'entrée. Dans certains cas, la fixation est assurée sur des parties tournantes du turboréacteur, arbre ou élément de rotor et on obtient un capot tournant. Ce type de solution est illustré par exemple par FR-A-2 168 938 qui prévoit un capot en deux parties assemblées par une vis centrale et dégivré par circulation d'air ou par FR-A-2 502 690 qui montre un capot avant solidarisé à un disque de soufflante ou encore par FR-A-2 315 616 qui décrit un capot de soufflante en deux parties fixé entre l'arbre du moteur et le disque.

Dans d'autres cas toutefois et l'invention se rattache à ce type de solution, le capot d'entrée est fixé sur une partie de structure fixe du turboréacteur et on obtient un capot fixe, non tournant. Un exemple de mise en oeuvre de ce genre d'application est fourni par FR-A-2 253 922 qui décrit la fixation d'un capot d'entrée à l'avant de la paroi interne fixe de l'entrée d'air d'un moteur. Ce genre de solution fait toutefois appel à des vis ou boulons disposés à la périphérie du capot d'entrée et laisse subsister des orifices ou embrèvements qui sont à l'origine de tourbillons susceptibles de provoquer des perturbations dans les écoulements d'air à l'entrée qui risquent de se répercuter dans la veine d'air du compresseur de turboréacteur.

Par ailleurs, les solutions antérieures connues ont fait apparaitre également diverses difficultés de mise en oeuvre lors de la réalisation du montage. Dans certains cas, cette opération de montage reste longue et complexe et présente en outre une sécurité insuffisante de bonne exécution dont les conséquences peuvent être néfastes, en particulier en cas d'oubli de serrage d'une vis ou d'un écrou.

L'invention vise à apporter une solution globale satisfaisante de fixation d'un capot d'entrée non tournant de turboréacteur, à ces différents problèmes :

- obtention d'une veine parfaite de circulation de l'air en assurant un profil aérodynamique sans cavité, ni obstacle ;
- dégivrage assuré en fonction des conditions de fonctionnement ;
- rapidité et simplicité du montage et du démontage ;
- sécurité absolue du montage interdisant un assemblage incorrect ou partiellement effectué.

Un capot d'entrée de turboréacteur conforme à l'invention, permettant d'obtenir ces résultats est caractérisé en ce que les moyens de fixation du cône extérieur sur la structure fixe du turboréacteur comportent, d'une part, une bride de l'embase cylindrique de centrage du cône extérieur et, d'autre part, un rebord amont d'une gorge circulaire de la face avant coopérante de ladite structure fixe qui présentent, l'une et l'autre des découpages du type baïonnette, en ce qu'un rebord intérieur cylindrique de l'embase du cône intérieur comporte des festons régulièrement répartis susceptibles de coopérer avec des éléments de la structure fixe de turboréacteur et en ce que à l'amont du cône intérieur est ménagé un logement centré sur l'axe géométrique dudit cône et présentant côté aval un passage de section polygonale et côté amont au moins un passage de section cylindrique, à l'amont du cône extérieur est ménagé au moins un passage de section polygonale, centré sur l'axe géométrique dudit cône et les moyens de fixation mutuelle des cônes intérieur et extérieur comportent une pièce de verrouillage constitué au moins d'une première partie polygonale coopérant avec ledit passage à section polygonale du cône extérieur, d'une partie cylindrique et d'une deuxième partie polygonale coopérant avec ledit passage à section polygonale du cône intérieur.

Ledit capot d'entrée conforme à l'invention, est monté à l'avant d'un turboréacteur qui est caractérisé en ce que ladite gorge circulaire de structure fixe associée à l'embase du cône extérieur de capot d'entrée est ménagée sur la face amont du boîtier de palier avant du turboréacteur, lesdits festons de l'embase du cône intérieur de capot d'entrée sont associés à des têtes de boulons qui assurent la fixation d'une coiffe de palier sur ledit boîtier de palier avant et en ce que ledit boîtier de palier, ladite coiffe de palier et la partie avant du cône intérieur de capot d'entrée comportent respectivement des trous de passage pour de l'air chaud de dégivrage amené par l'intérieur des bras rayonnants du carter d'entrée de turboréacteur, à travers le moyeu qui porte lesdits bras, cet air, après circulation à travers l'espace intérieur du capot d'entrée, puis l'espace ménagé entre le cône intérieur et le cône extérieur de capot d'entrée, s'échappant dans la veine d'entrée d'air du turboréacteur par des trous ménagés au voisinage de l'embase du cône extérieur de capot d'entrée.

Les moyens de fixation du capot d'entrée de turboréacteur selon l'invention présentent de nombreux résultats avantageux et une solution satisfaisante aux divers problèmes qui ont été précédemment évoqués. Ainsi, l'absence de toute aspérité dans une paroi de veine de circulation d'air par l'absence de vis, écrou ou tête de boulon ainsi que de tout orifice ou embrèvement, susceptibles de provoquer des perturbations dans les écoulements d'air de la veine d'entrée du turboréacteur permet d'obtenir un profil aérodynamique de paroi de veine qui est correct. Une solution satisfaisante est également apportée aux problèmes liés au dégivrage sans qu'il soit imposé de faire tourner le capot d'entrée, ce qui présente des inconvénients dans certaines applications et impose par ailleurs des contraintes de conception touchant d'autres parties du turboréacteur, notamment les parties tournantes. En outre, les moyens de fixation définis pour le capot d'entrée de turboréacteur procure un assemblage présentant des qualités importantes. Notamment, la possibilité d'un verrouillage ou d'un déverrouillage rapide assurent la simplicité et la rapidité du montage ou du démontage du capot d'entrée. Une sécurité nettement améliorée d'assemblage correct, éliminant tout incident de montage tel qu'un oubli de serrage d'une vis ou d'un écrou ou des serrages défectueux associés à des mises en place incorrectes, est obtenue. En effet, la disposition de la pièce de verrouillage selon l'axe central du capot d'entrée et de la machine constitue un témoin visuel directement accessible d'un assemblage correct car l'ensemble de capot d'entrée ne peut tenir en place que s'il est correctement monté.

D'autres caractéristiques et avantages de l'invention seront mieux compris à la lecture qui va suivre d'un mode de réalisation de l'invention, en référence aux dessins annexés sur lesquels :

– la figure 1 montre une vue en coupe longitudinale par un plan passant par l'axe de rotation d'un turboréacteur de la partie avant du turboréacteur représentant un capot d'entrée monté sur une structure fixe de turboréacteur, conforme à l'invention ;

– la figure 2 représente un détail agrandi selon II de la figure 1 montrant l'assemblage de l'embase du capot d'entrée sur la structure fixe du turboréacteur ;

– la figure 3 montre une vue schématique partielle de face, à l'avant du turboréacteur, en coupe selon III-III de la figure 1 ;

– la figure 4 montre une vue en perspective éclatée représentant l'ensemble du capot d'entrée de la figure 1 en cours de montage à l'avant du turboréacteur ;

– la figure 5 montre une vue analogue à la figure 1 représentant un capot d'entrée monté présentant une variante de réalisation.

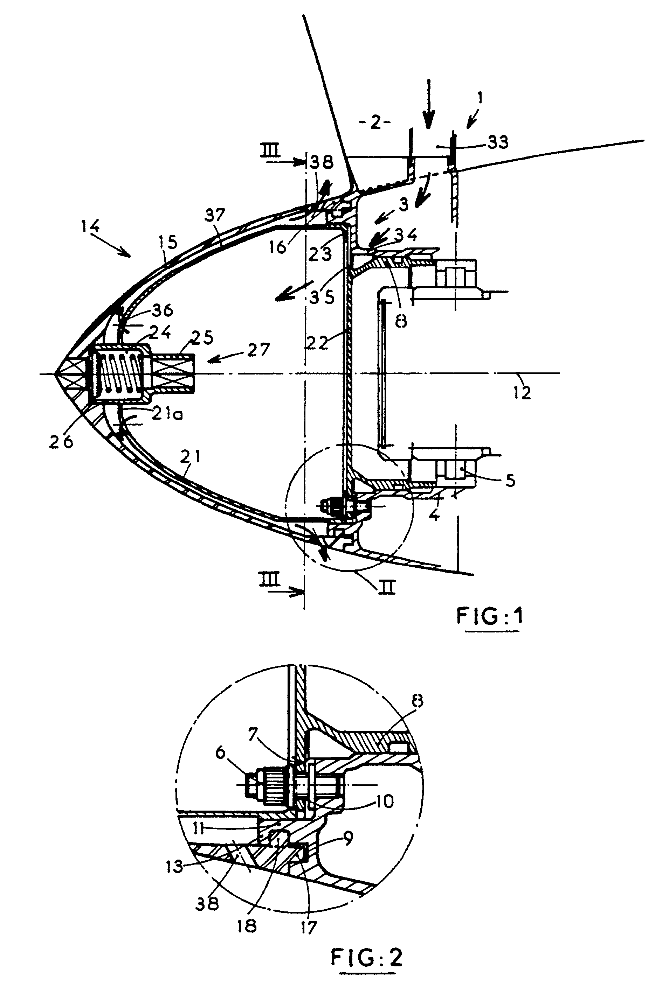

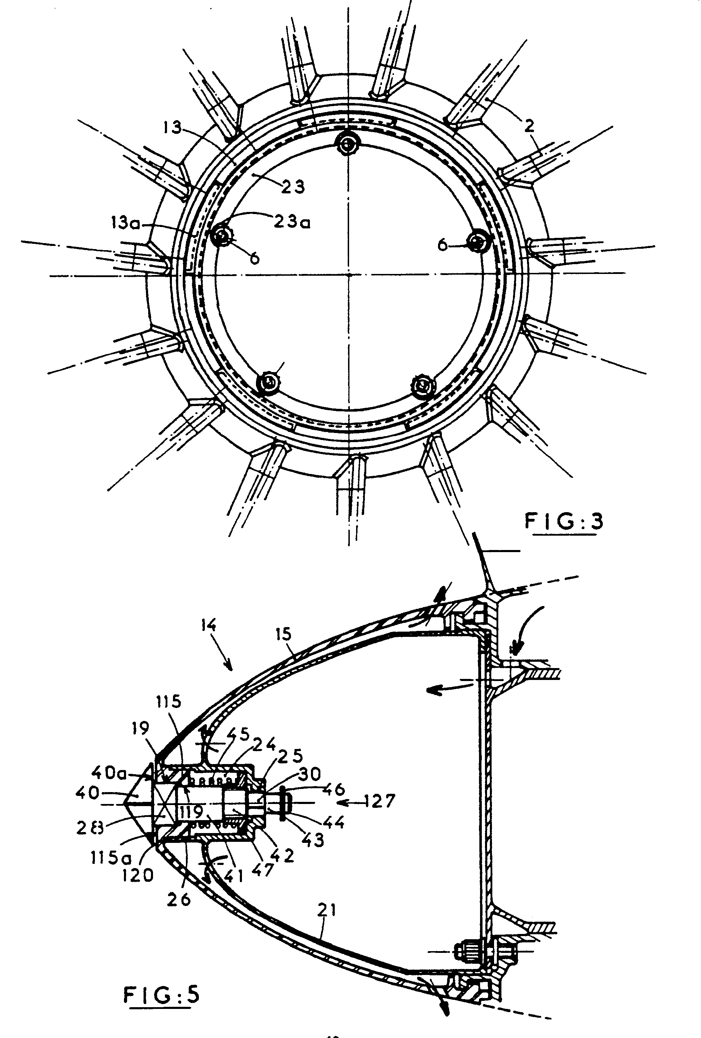

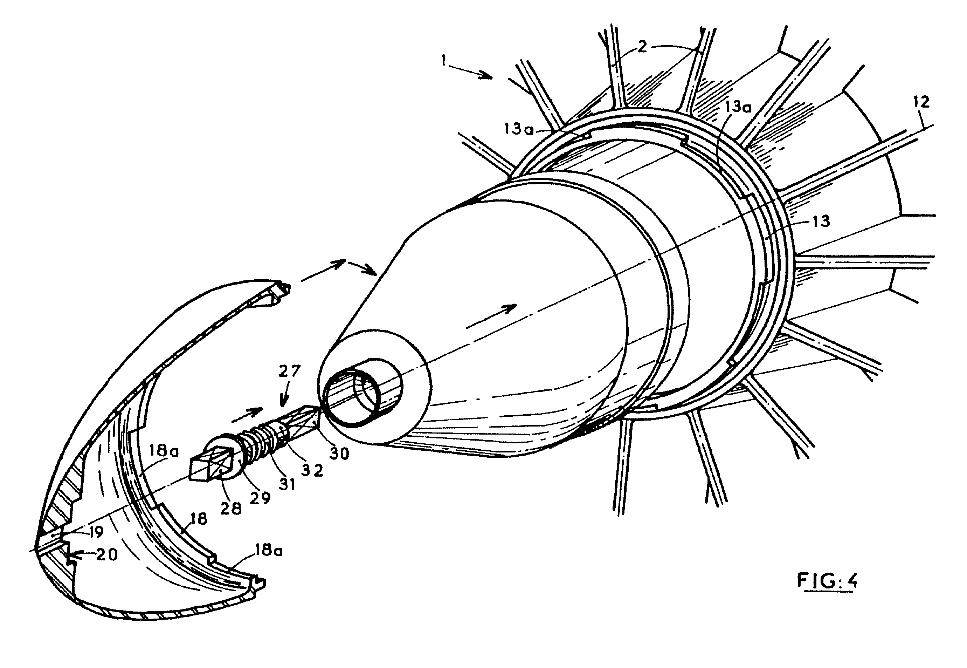

La partie avant d'un turboréacteur, représentée sur les figures 1, 3 et 4, comporte un carter d'entrée 1 dont seule la partie interne a été représentée. Le carter d'entrée 1 est constitué d'une pluralité de bras rayonnants 2 solidaires d'un moyeu central 3 prolongé par un boîtier 4 du palier avant du turboréacteur dont le roulement 5 a été schématisé sur la figure 1.

Comme cela est plus clairement représenté en détails sur la figure 2, des boulons 6 assurent la fixation sur la face avant 7 du boîtier 4 de palier d'une coiffe 8 de protection du palier. La face avant 7 du boîtier 4 de palier comporte également une gorge circulaire 9, disposée en position radialement externe par rapport aux trous 10 de passage desdits boulons 6. Entre ladite gorge 9 et les trous 10, la face avant 7 du boîtier 4 porte une bride 11 orientée selon une direction longitudinale parallèle à l'axe géométrique 12 de rotation du turboréacteur. La bride 11 porte un rebord 13 orienté radialement vers l'extérieur et comportant des découpes 13a régulièrement réparties du type baïonnette.

Sur la partie avant du turboréacteur qui vient d'être décrite est monté un capot d'entrée 14 de type non-tournant qui est principalement constitué de deux parties respectivement intérieure et extérieure, assemblées par des moyens de fixation. La partie extérieure a la forme générale d'un cône extérieur 15, constitué d'un matériau léger, par exemple en aluminium ou en matériau composite. L'embase 16 du cône extérieur 15 est constituée d'une bride 17 annulaire qui s'adapte dans la gorge circulaire 9 du boîtier 4 de palier et d'un rebord 18 orienté radialement vers l'intérieur et comportant des découpes 18a régulièrement réparties de manière à constituer avec le rebord 13 du boîtier 4 de palier un assemblage du type baïonnette. Le cône extérieur 15 comporte à sa pointe avant un orifice 19 dont la section présente une forme polygonale qui, dans le mode de réalisation représentée à titre d'exemple, est un carré. Cet orifice 19 à section polygonale est prolongé vers l'intérieur du cône par un épaulement cylindrique 20. La partie intérieure du capot d'entrée a également et de manière similaire à la partie extérieure la forme générale d'un cône intérieur 21, constitué d'un matériau présentant une résistance mécanique suffisante, par exemple en acier. L'embase 22 du cône intérieur 21 est formée d'un rebord annulaire 23, radialement orienté vers l'intérieur du cône et présentant une pluralité de festons 23a qui s'engagent sur les têtes des boulons 6. Ladite embase 22 du cône intérieur 21 s'adapte à l'intérieur de la bride 11 du boîtier de palier. A l'avant, le cône intérieur 21 porte un logement 24 constitué d'un passage 25 côté aval de section polygonale, disposée vers l'intérieur du cône 21 et d'un passage amont 26 cylindrique dont l'extrémité amont s'adapte dans l'épaulement cylindrique 20 du cône extérieur 15 et à laquelle est raccordée la paroi latérale 21a du cône intérieur 21, la section de la partie cylindrique 26 étant supérieure à la section polygonale 25 à laquelle elle se raccorde. L'orifice 19-20 du cône extérieur 15 ainsi que le logement 24 porté par le cône intérieur 21 sont centrés sur l'axe géométrique 12 de rotation du turboréacteur qui constitue également un axe géométrique de symétrie du capot d'entrée 14. Dans ledit orifice 19-20 du cône extérieur 15 et dans le logement 24 porté par le cône intérieur 21 est disposé une pièce de verrouillage 27, entre le cône intérieur 21 et le cône extérieur 15 constituant le capot d'entrée 14. La pièce de verrouillage 27, dans le mode de réalisation de l'invention, représenté sur les figures 1 à 4, coopère, d'une part, avec l'orifice 19 du cône extérieur 15 par une première partie polygonale amont 28 et avec l'épaulement cylindrique 20 dudit cône extérieur 15 par une partie cylindrique formant une rondelle 29 et, à son autre extrémité, d'autre part, avec la partie polygonale 25 du logement 24 du cône intérieur 21 par une deuxième partie polygonale aval 30. La pièce de verrouillage 27 comporte en outre, accolée à la rondelle 29, une partie formant ressort 31 et, accolée à la deuxième partie polygonale aval 30, une partie cylindrique formant butée 32 dont la section est légèrement supérieure à la section polygonale 25 du logement 24.

Le moyeu central 3 du carter d'entrée 1 comporte des passages 33 qui, par l'intérieur des bras rayonnants 2 creux et à travers l'intérieur du boîtier 4 de palier, par des perçages, respectivement 34 et 35, ménagés sur la paroi interne dudit boîtier 4 et sur la coiffe 8 de palier, amènent l'air chaud de dégivrage à l'intérieur du cône intérieur 21 du capot d'entrée 14. De là, l'air de dégivrage, passant par des trous 36, percés à l'avant dudit cône intérieur 21, circule dans l'espace 37, ménagé entre le cône intérieur 21 et le cône extérieur 15 du capot d'entrée 14, avant de s'échapper dans la veine d'entrée d'air du turboréacteur par des orifices 38 ménagés en voisinage de l'embase 16 du cône extérieur 15.

Le mode de montage du capot d'entrée 14 qui vient d'être décrit à l'avant d'un turboréacteur est le suivant. On positionne d'abord le cône intérieur 21 de façon que les festons 23a s'encastrent sur les têtes des boulons 6, de manière à empêcher toute rotation du cône intérieur 21. On place la pièce de verrouillage 27 dans le logement 24 du cône intérieur 21, la deuxième partie polygonale 30 venant se placer dans la partie polygonale 25 du logement 24. On approche le cône extérieur 15, de manière à placer la bride 17 de l'embase 16 du cône dans la gorge circulaire 9 du boîtier 4 de palier. A l'aide d'un outil approprié, on comprime le ressort 31 de la pièce de verrouillage 27 de manière à retirer la première partie polygonale 28 de la pièce de verrouillage 27, de l'orifice 19 du cône extérieur 15 et on tourne le cône extérieur 15, d'un angle de l'ordre de trente degrés dans l'exemple représenté aux dessins, de manière à engager les attaches baïonnettes, respectivement le rebord 18 du cône extérieur 15 derrière le rebord 13 du boîtier 4 de palier. La position correcte est obtenue lorsque les polygones respectifs 28 de la pièce de verrouillage 27 et 19 du cône extérieur 15 sont superposables. On relâche alors la pression sur le ressort 31 et la première partie polygonale 28 de la pièce de verrouillage 27 vient prendre sa place dans l'orifice 19 du cône extérieur 15. Tout risque d'oubli ou de montage incorrect est ainsi éliminé car la pièce de verrouillage ne peut prendre sa place que si l'ensemble du capot d'entrée 14 est correctement monté, la présence de ladite pièce 27 de verrouillage étant directement et visuellement vérifiée.

En conservant les éléments essentiels de l'invention, une variante de réalisation de la pièce de verrouillage 27 peut être envisagée et cette variante est représentée à la figure 5. Les mêmes références numériques de désignation des pièces et éléments identiques à ceux des figures 1 à 4 ont été conservées sur la figure 5 et la description se limitera à indiquer les différences de réalisation. La partie cylindrique amont 26 du logement 24 du cône intérieur 21 coopère avec un épaulement cylindrique 120 ménagé à l'extérieur d'une partie cylindrique 115 alésée, solidaire à l'amont et à l'intérieur du cône extérieur 15 dont la pointe est tronquée. L'alésage de cette partie cylindrique 115 comporte une partie amont constituant l'orifice 19 de section polygonale et une une partie aval 119 cylindrique de section légèrement inférieure à celle de la partie amont 19. La pièce de verrouillage 127 coopère, comme dans le mode de réalisation décrit en référence aux figures 1 à 4, par une première partie polygonale amont 28 avec l'orifice 19 de la partie 115 du cône extérieur 15 et par une deuxième partie polygonale 30 avec la partie polygonale 25 du logement 24 du cône intérieur 21.

La première partie polygonale amont 28 est prolongée par une pointe 40 qui reconstitue l'extrémité du cône extérieur 15, la base 40a de ladite pointe 40 coopérant avec la face avant 115a de l'élément 115 du cône extérieur 15. La pièce de verrouillage 127 comporte, en outre, une première partie cylindrique 41 accolée à la première partie polygonale 28 et coopérant essentiellement avec la partie cylindrique 119 de l'alésage de la partie cylindrique 115 du cône extérieur 15, une deuxième partie cylindrique 42 filetée, disposée entre ladite première partie cylindrique 41 et ladite deuxième partie polygonale 30 et enfin, en extrémité, une troisième partie cylindrique 43 dans laquelle est ménagée une gorge 44. Sur la partie filetée 42 est vissée une douille à épaulement 47. Entre ledit épaulement de la douille 47 et la face arrière de l'élément cylindrique 115 du cône extérieur 15 est placé un ressort de compression 45. Dans la gorge 44 de la pièce de verrouillage 127 est monté un jonc 46. Comme dans la réalisation décrite en référence aux figures 1 à 4, dans l'exemple représenté à la figure 5, la première partie polygonale 28 de la pièce de verrouillage 127 ainsi que l'orifice coopérant 19 du cône extérieur 15 ont une section carrée. La deuxième partie polygonale 30 de la pièce de verrouillage 127 ainsi que la partie polygonale 25 du logement 24 du cône intérieur 21 ont, dans l'exemple représenté à la figure 5, une section en pentagone. Dans ce mode de réalisation en effet, le nombre de bras rayonnants 2 du carter d'entrée 1 est de quinze et pour obtenir le positionnement correct, au montage, des différentes pièces de l'ensemble, la section polygonale a un nombre de côtés qui est un sous-multiple du nombre de bras, soit cinq dans l'exemple représenté.

Le mode de montage du capot d'entrée 14 reste identique, dans la variante de réalisation qui vient d'être décrite en référence à la figure 5, à celui qui a été précédemment décrit en référence aux figures 1 à 4. Le ressort 31 est placé sur la pièce de verrouillage 127 et la douille à épaulement 47 est vissée sur la pièce de verrouillage 127 avant de la placer dans le logement 24 du cône intérieur 15. La première partie polygonale 28 de la pièce de verrouillage est retirée de l'orifice 19 de l'élément 115 du cône extérieur 15 en comprimant le ressort 31 par l'introduction d'un outil du type à griffes dans l'espace libre ménagé entre la base 40a de la pointe 40 de la pièce de verrouillage 127 et la face avant 115a de l'élément 115 du cône extérieur 15. Cette opération est également effectuée pour obtenir un déverrouillage du capot d'entrée 14. Le capot d'entrée 14 réalisé selon cette variante représentée à la figure 5 procure également les mêmes avantages qui ont été précédemment notés.

**Revendications**

1. Capot d'entrée non-tournant de turboréacteur comportant une partie intérieure appelée cône intérieur (21) et une partie extérieure appelée cône extérieur (15) caractérisé en ce que les moyens de fixation du cône extérieur (15) sur la structure fixe (3-4) de turboréacteur comportent, d'une part, un rebord (18) de l'embase (16) cylindrique de centrage du cône extérieur (15) et d'autre part, un rebord amont (13) d'une bride axiale (11) de la face avant (7) coopérante de ladite structure fixe (4) qui présentent, l'une et l'autre des découpes (18a-13a) du type baïonnette, en ce que un rebord (23) intérieur annulaire de l'embase (22) du cône intérieur (21) comporte des festons (23a) régulièrement répartis susceptibles de coopérer avec des éléments (6) de la structure fixe (4) de turboréacteur et en ce que à l'amont du cône intérieur (21) est ménagé un logement (24) centré sur l'axe géométrique dudit cône et présentant côté aval un passage (25) de section polygonale et côté amont au moins un passage (26) de section cylindrique, à l'amont du cône extérieur (15) est ménagé au moins un orifice (19) de section polygonale, centré sur l'axe géométrique dudit cône et les moyens de fixation mutuelle des cônes intérieur (21) et extérieur (15) comportent une pièce de verrouillage (27 ; 127) constitué au moins d'une première partie polygonale (28) coopérant avec ledit orifice (19) à section polygonale du cône extérieur (15), d'une partie cylindrique (32 ; 42) et d'une deuxième partie polygonale (30) coopérant avec ledit passage aval (25) à section polygonale du logement (24) du cône intérieur (21).

2. Capot d'entrée de turboréacteur selon la revendication 1 caractérisé en ce que la pièce de verrouillage (27) est constituée entre les deux parties polygonales (28, 30), formant chacune une extrémité, d'une partie formant ressort (31) de compression, disposée entre deux parties cylindriques (29, 32).

3. Capot d'entrée de turboréacteur selon l'une des revendications 1 ou 2 caractérisé en ce que les deux parties polygonales (28, 30) de la pièce de verrouillage (27) ainsi que les passages (19, 25) de cône coopérant ont une section carrée.

4. Capot d'entrée de turboréacteur selon la revendication 1 caractérisé en ce que la pièce de verrouillage (127) est constituée, de l'amont vers l'aval, d'un élément formant la pointe (40) du capot d'entrée (14) de ladite première partie polygonale (28), d'une première (41) et d'une deuxième (42) parties cylindriques, la deuxième (42) présentant un diamètre inférieur à celui de la première (41), de la deuxième partie polygonale (30) et d'une troisième partie cylindrique (43) de diamètre inférieur à celui qui est enveloppé par le passage polygonal aval (25) du logement (24).

5. Capot d'entrée de turboréacteur selon la revendication 4 dans lequel la pièce de verrouillage (127) est associée à une douille (47) à épaulement vissée sur ladite deuxième partie cylindrique (42), à un ressort (45) de compression entourant ladite première partie cylindrique (41) et ladite douille (47) et à un jonc (44) monté dans une gorge ménagée sur ladite troisième partie cylindrique (43).

6. Turboréacteur muni d'un capot d'entrée selon l'une quelconque des revendications 1 à 5 caractérisé en ce que ladite bride axiale (11) de structure fixe associée à l'embase (16) du cône extérieur (15) de capot d'entrée est ménagée sur la face avant (7) du boîtier (4) de palier avant du turboréacteur, ladite face avant (7) du boîtier (4) de palier et ladite embase (16) de cône comportant en outre respectivement une gorge circulaire (9) et une bride annulaire (17) coopérantes, lesdits festons (23a) de l'embase (22) du cône intérieur (21) de capot d'entrée (14) sont associés à des têtes de boulons (6) qui assurent la fixation d'une coiffe (8) de palier sur ledit boîtier (4) de palier avant et en ce que ledit boîtier (4) de palier, ladite coiffe (8) de palier et la partie avant du cône intérieur (21) de capot d'entrée comportent respectivement des trous (34, 35, 36) de passage pour de l'air chaud de dégivrage amené par l'intérieur des bras rayonnants (2) du carter d'entrée de turboréacteur, à travers le moyeu (3) qui porte lesdits bras (2), cet air, après circulation à travers l'espace intérieur du capot d'entrée (14), puis l'espace (37) ménagé entre le cône intérieur (21) et le cône extérieur (15) de capot d'entrée, s'échappant dans la veine d'entrée d'air du turboréacteur par des orifices (38) ménagés au voisinage de l'embase (16) du cône extérieur (15) de capot d'entrée (14).

7. Turboréacteur muni d'un capot d'entrée selon l'une quelconque des revendications 1, 4 et 5 et la revendication 6 dans lequel la première partie polygonale (28) de la pièce de verrouillage (127) ainsi que l'orifice (19) coopérant du cône extérieur (15) de capot d'entrée ont une section carrée et la deuxième partie polygonale (30) de la pièce de verrouillage (127) ainsi que le passage (25) coopérant du logement (24) du cône intérieur (21) de capot d'entrée ont une section présentant un nombre de côtés qui est un sous-multiple du nombre de bras rayonnants (2) du carter d'entrée.

## Ansprüche

1. Feste Stromlinienverkleidung für ein Strahltriebwerk mit einem als Innenkonus (21) bezeichneten inneren Teil und einem als Außenkonus (15) bezeichneten äußeren Teil, dadurch gekennzeichnet, daß die Mittel zur Befestigung des Außenkonus (15) an der festen Struktur (3-4) des Strahltriebwerks aus einerseits einer Randleiste (18) des zylindrischen Zentriersockels (16) des Aussenkonus (15) und andererseits einer stromaufwärtigen Randleiste (13) eines axialen Flansches (11) der damit zusammenwirkenden Vorderseite (7) der festen Struktur (4) bestehen, wobei beide Teile bajonettartige Ausschnitte (18a-13a) aufweisen, daß eine innere ringförmige Randleiste (23) des Sockels (22) des Innenkonus (21) in regelmäßiger Verteilung angeordnete Ausnehmungen (23a) aufweist, die mit Elementen (6) der festen Struktur (4) des Strahltriebwerks zusammenwirken können, und daß stromaufwärts des Innenkonus (21) eine Aufnahme (24) vorgesehen ist, die zur geometrischen Achse des Innenkonus zentriert ist und auf der stromabwärtigen Seite einen Durchgang (25) mit polygonalem Querschnitt und auf der stromaufwärtigen Seite wenigstens einen Durchgang (26) mit zylindrischem Querschnitt aufweist, wobei auf der stromaufwärtigen Seite des Außenkonus (15) wenigstens eine Öffnung (19) mit polygonalem Querschnitt vorgesehen ist, die zur geometrischen Achse des Außenkonus zentriert ist, sowie Mittel zur gegenseitigen Befestigung des Innenkonus (21) und des Außenkonus (15) mit einem Verriegelungsglied (27 ; 127), das zumindest ein mit der Öffnung (19) des Außenkonus (15) mit polygonalem Querschnitt zusammenwirkendes erstes polygonales Teil (28), ein zylindrisches Teil (32 ; 42) und ein mit dem genannten stromabwärtigen Durchgang (25) mit polygonalem Querschnitt der Aufnahme des Innenkonus (21) zusammenwirkendes zweites polygonales Teil (30) umfaßt.

2. Stromlinienverkleidung für ein Strahltriebwerk nach Anspruch 1, dadurch gekennzeichnet, daß das Verriegelungsglied (27) zwischen den beiden polygonalen Teilen (28, 30), die jeweils ein Ende bilden, das durch ein Teil gebildet ist ; das eine zwischen beiden zylindrischen Teilen (29, 32) angeordnete Kompressionsfeder (31) bildet.

3. Stromlinienverkleidung für ein Strahltriebwerk nach einem der Ansprüche 1 oder 2, dadurch gekennzeichnet, daß die beiden polygonalen Teile (28, 30) des Verriegelungsglieds (27) und die zusammenwirkenden Konus-Durchgänge (19, 25) quadratischen Querschnitt haben.

4. Stromlinienverkleidung für ein Strahltriebwerk nach Anspruch 1, dadurch gekennzeichnet, daß das Verriegelungsteil (127) von der stromaufwärtigen zur stromabwärtigen Seite aus folgenden Teilen besteht: einem die Spitze (40) der Stromlinienverkleidung (14) bildenden Element, dem ersten polygonalen Teil (28), einem ersten (41) und einem zweiten (42) zylindrischen Teil, von denen das zweite (42) einen kleineren Durchmesser hat als das erste (41), dem zweiten polygonalen Teil (30) und einem dritten zylindrischen Teil (43), dessen Durchmesser kleiner ist als der Durchmesser, der von dem stromabwärtigen polygonalen Durchgang (25) der Aufnahme (243) umschrieben wird.

5. Stromlinienverkleidung nach Anspruch 4, bei der zu dem Verriegelungsglied (127) eine auf den zweiten zylindrischen Teil (42) aufgeschraubte, mit einer Schulter versehene Buchse (47), eine den ersten zylindrischen Teil (41) und die Buchse (47) umgebende Kompressionsfeder (45) und ein in eine an dem dritten zylindrischen Teil (43) angebrachten Kehle montierter Sprengring (44) gehören.

6. Strahltriebwerk mit einer Stromlinienverkleidung nach einem der Ansprüche 1 bis 5, dadurch gekennzeichnet, daß der dem Sokkel (16) des Außenkonus (15) der Stromlinienverkleidung zugeordnete axiale Flansch (11) der festen Struktur an der Vorderseite des vorderen Lagergehäuses (4) des Strahltriebwerks angebracht ist, wobei die Vorderseite (7) des Lagergehäuses (4) und der Sockel (16) des Konus außerdem eine kreisförmige Kehle (9) bzw. einen mit dieser zusammenwirkenden kreisförmigen Flansch (17) aufweisen, daß die genannten Ausnehmungen (23a) des Sockels (22) des Innenkonus (21) der Stromlinienverkleidung (14) Köpfen von Schraubenbolzen (6) zugeordnet sind, die die Befestigung einer Lagerkappe (8) an dem Gehäuse (4) des des vorderen Lagers sichern, und daß das Lagergehäuse (4), die Lagerkappe (8) und der vordere Teil des Innenkonus (21) der Stromlinienverkleidung jeweils Durchgangslöcher (34, 35, 36) für den Durchtritt von Enteisungswarmluft aufweisen, die durch das Innere der radialen Arme (2) des vorderen Gehäuses des Strahltriebwerks und durch die diese Arme (2) tragende Nabe (3) geführt wird und nach der Zirkulation durch den inneren Zwischenraum der Stromlinienverkleidung (14), dann über den zwischen dem Innenkonus (21) und dem Außenkonus (15) der Stromlinienverkleidung vorgesehenen Zwischenraum (7) durch in der Nähe des Sockels (16) des Außenkonus (15) der Stromlinienverkleidung (14) vorgesehene Öffnungen (38) in den Eingangsluftstrahl des Strahltriebwerks entweicht.

7. Strahltriebwerk mit einer Stromlinienverkleidung nach einem der Anprüche 1,4 und 5 und Anspruch 6, bei dem der erste polygonale Teil (28) des Verriegelungsglieds (127) sowie die damit zusammenwirkende Öffnung (19) des Außenkonus (15) der Stromlinienverkleidung quadratischen Querschnitt haben und das zweite polygonale Teil (30) des Verriegelungsglieds (127) sowie der damit zusammenwirkende Durchgang (25) der Aufnahme (24) des Innenkonus (21) der Stromlinienverkleidung einen Querschnitt haben, mit einer Zahl von Seiten, die ein Untervielfaches der Zahl der radialen Arme (2) des Eintrittsgehäuses ist.

## Claims

1. Non-rotating intake nose cone for a turbojet engine comprising an inner part called the inner cone (21) and an outer part called the outer cone (15) characterised in that the means of fixing the said outer cone (15) to the fixed structure (3-4) of the turbojet engine comprises, on the one hand, a return (18) on the cylindrical base (16) of the outer cone (15) which centres the said outer cone (15) and, on the other hand, an upstream return (13) on an axial flange (11) on the front face (7) working in conjunction with the said fixed structure (4), which both present cut-outs (18a-13a) of the bayonet fitting type, in that an inner annular return (23) on the base (22) of the inner cone (21) comprises the evenly distributed scallops (23a) capable of interacting with the elements (6) of the fixed structure (4) of the turbojet engine and in that the upstream end of the inner cone (21) is formed a housing (24) centered about the geometric axis of the said cone and presenting on its downstream side a passage (25) of polygonal cross section and on its upstream side at least one passage (26) of cylindrical cross section, at the upstream end of the outer cone (15) is formed at least one hole (19), of polygonal cross section, centered on the geometric axis of the said cone and a means of fastening together the two cones inner (21) and outer (15) comprising a locking piece (27 : 127) consisting of at least one first polygonal portion (28) working with the said polygonal-shaped hole (19) in the outer cone (15), of a cylindrical portion (32 : 42) and a second polygonal portion (30) working with the said downstream polygonal-shaped passage (25) in the housing (24) if the inner cone (21).

2. Intake nose cone for a turbojet engine in accordance with Claim 1 characterised in that the locking piece (27) is made up, between the two polygonal portions (28, 30), each forming an end, of a portion forming a compression spring (31), placed between two cylindrical portions (29, 32).

3. Intake nose cone for a turbojet engine in accordance with either of Claims 1 or 2 characterised in that the two polygonal portions (28, 30) of the locking piece (27) as well as the corresponding passages (19, 25) in the cone are of square section.

4. Intake nose cone for a turbojet engine in accordance with Claim 1 characterised in that the locking piece (127) is made up, from front to rear, of an element forming the point (40) of the intake nose cone (14), of the said first polygonal portion (28), of a first portion (41) and a second portion (42) of cylindrical shape, the second (42) having a diameter less than that of the first (41), of the second polygonal portion (30) and of a third cylindrical portion (43) of a diameter less than that which is enclosed by the downstream polygonal passage (25) of the housing (24).

5. Intake nose cone for turbojet engine in accordance with Claim 4 in whichthe locking piece (127) is associated with a flanged bush (47) screwed onto the said second cylindrical portion (42), with a compression spring (45) surrounding the said first cylindrical portion (41) and the said bush (47) and with a circlip (44) fitted into a groove formed in the said third cylindrical portion (43).

6. Turbojet engine fitted with an intake nose cone in accordance with any of the Claims 1 to 5 characterised in that the said axial flange (11) of the fixed structure associated with the base (16) of the outer cone (15) of the nose cone is formed on the front face (7) of the housing (4) of the front bearing of the turbojet engine and the said base (16) of the cone comprises in addition respectively a circular groove (9) and an annular flange (7), working together, the said scallops (23a) on the base (22) of the inner cone (21) of the nose cone (14) are associated with the heads of the bolts (6) which ensure the attachment of a bearing cover (8) to the said housing (4) of the front bearing and in that thesaid bearing housing (4), the said bearing cover (8) and the front part of the inner cone (21) of the intake nose cone comprise respectively the holes (34, 35, 36) for the passage into it of hot de-icing air fed through the radial struts (2) of the air intake cowling of the turbojet engine via the hub (3) which carries the said struts (2), this air, after circulating through the space inside the intake nose cone (14) and then the space (37) formed between the inner cone (21) and the outer cone (15) of the intake nose cone, escaping into the intake airflow via the holes (38) formed in the region of the base (16) of the outer cone (15) of the intake nose cone (14).

7. Turbojet engine fitted with an intake nose cone in accordance with any of Claims 1, 4 and 5 and Claim 6 in which the first polygonal portion (28) of the locking piece (127) as well as the matching orifice (19) on the outer cone (15) of the intake nose coneare of square section and the second polygonal portion (30) of the locking piece (127) as well as the matching passage (25) of the housing (24) of the inner cone (21) of the intake nose cone are of a cross section having a number of sides that is a sub-multiple of the number of the radial struts (2) of the intake cowling.

FIG:1

FIG:2

FIG:3

FIG:5

FIG:4